# EUROPEAN PATENT APPLICATION

(11) **EP 4 748 895 A1**
(43) Date of publication of application: **27.05.2026**
(21) Application number: 24215482.1
(22) Date of filing: 26.11.2024
(51) Int. Cl.: C09J 5/00, C08J 5/12

(54) **BONDING A FOAM, SENSOR OR FUNCTIONAL PART INSIDE A TIRE WITH A PRESSURE SENSITIVE HOTMELT ADHESIVE**

(71) Applicant: Henkel AG & Co. KGaA, 40589 Düsseldorf (DE)
(72) Inventor: SCHRIEFERS, Mathias, 41199 Mönchengladbach (DE); PRELL, Jonathan, 40223 Düsseldorf (DE); SCHOENFELD, Rainer, 40627 Düsseldorf (DE); THELEN, Natalie, 45359 Essen (DE); FRIEDRICH, Norman, 40225 Düsseldorf (DE); KLEINER, Felix, 01689 Weinböhla (DE); GONGOLA, Vesna, 40625 Düsseldorf (DE); HASLBERGER, Stefan, 85399 Halbergmoos (DE)
(74) Representative: Viering, Jentschura & Partner mbB Patent- und Rechtsanwälte

(57) **Abstract**

The present invention relates to the use of the pressure sensitive hotmelt adhesive comprising at least one polymer and at least one polyester polyol based on betulin for bonding a foam, sensor or functional part to the inside of a tire.

Furthermore, the present invention relates to a method for bonding a foam, sensor or functional part inside a tire comprising an innerliner having an innerliner surface facing an interior cavity of the tire, the method comprising or consisting of the steps of:
(i) applying a pressure sensitive hotmelt adhesive comprising at least one polymer and at least one polyester polyol based on betulin to the innerliner surface to form a pressure sensitive hotmelt adhesive coating;
(ii) applying a foam, sensor or functional part to the coating of the pressure sensitive hotmelt adhesive.

In addition, the present invention relates to a tire comprising
an innerliner having an innerliner surface facing an interior cavity of the tire,
a pressure sensitive hotmelt adhesive layer, wherein the pressure sensitive adhesive comprises at least one polymer and at least one polyester polyol based on betulin and
a foam, sensor or functional part
wherein the foam, sensor or functional part is disposed on the pressure sensitive hotmelt adhesive layer,
wherein
(a) the pressure sensitive hotmelt adhesive layer is disposed on the innerliner surface facing the interior cavity of the tire, or
(b) a release agent is disposed on the innerliner surface facing an interior cavity of the tire and the pressure sensitive hotmelt adhesive layer being disposed on the release agent.

## Description

### Field of the Invention

The invention relates to a tire comprising an innerliner having an innerliner surface facing an interior cavity of the tire, a pressure sensitive hotmelt adhesive layer and a foam, sensor or functional part with the foam, sensor or functional part being disposed on the pressure sensitive hotmelt adhesive layer, the pressure sensitive hotmelt adhesive layer being disposed on the innerliner surface facing the interior cavity of the tire, or a release agent being disposed on the innerliner surface facing an interior cavity of the tire and the pressure sensitive hotmelt adhesive layer being disposed on the release agent. The present invention is further directed to a method for bonding a foam, sensor or functional part inside a tire with a pressure sensitive hotmelt adhesive, said method comprising the steps of applying a pressure sensitive hotmelt adhesive to the innerliner surface to form pressure sensitive hotmelt adhesive coating and applying a foam, sensor or functional part to the coating.

### Background

The inside of a tire may require functionalization prior to its use of the consumer. For example, government regulations and consumer preferences continue to compel a reduction in the acceptable noise levels produced from the tires of passenger vehicles with one source of road noise being resonance within the air chamber enclosed by the innermost surface of the tire and the rim. Thus, one type of effort to reduce tire noise is damping the sound from the air vibration in the air chamber. Efforts have focused mainly on altering the innermost surface of the tire adjacent the tire carcass. Shortcomings in these previous efforts, as well as new stricter regulations regarding noise reduction, have provided a need for further improvements to the tire to reduce sound transmission due to vibrations within the air chamber.

Carcasses of pneumatic green tires are built as a series of layers of flexible high modulus cords encased in a low modulus rubber. An innerliner is positioned to form the innermost surface of the tire. The green tire is cured in a curing press using a curing bladder, which forces expansion of the tire. During curing, the innerliner expands with the carcass, which is forced against the indentations in the curing mold to form the tread of the tire, and all components are co-cured so as to provide a substantially cohesive bond between one and another.

The innerliner for a pneumatic tubeless tire is typically formed from a compound containing for example a halobutyl rubber due to its good barrier properties. Before the tire is cured, the entire inner surface of the innerliner and/or the outer surface of the curing bladder are coated with a release agent. The release agent is commonly referred to as a "lining cement" when used on the surface of the innerliner, and as a "bladder lube" or "bladder spray" when used on the curing bladder. The release agent facilitates removal of the curing bladder from the innerliner after curing so that the innerliner is not damaged.

The release agent, however, also adversely affects the adhesion performance of adhesives applied to a tire coated with said release agent. Thus, prior to bonding of, for example, a foam to the cured innerliner, in prior art methods the innerliner must be cleaned to remove contaminants present on the innerliner surface from the molding operation. Specifically, the release agent must be removed from the innerliner surface. Solvents have typically been used for this cleaning operation. Solvents effective for removing the release agents contain hazardous air pollutants. These solvents are thus subject to environmental regulations, which have become more stringent in the recent past.

It is thus an object underlying the present invention to provide better solutions and in particular to eliminate the need for a cleaning step when bonding a foam, sensor or functional part inside a tire, especially, since cleaning of the innerliner surface by way of solvents is labor intensive and costly due to its hazardous nature.

### Summary of the Invention

The above-outlined problems have been solved by the present invention which relates to a method for bonding a foam, sensor or functional part inside a tire comprising an innerliner having an innerliner surface facing an interior cavity of the tire, the method comprising or consisting of the steps of:
(i) applying a pressure sensitive hotmelt adhesive to the innerliner surface at a temperature of 100 °C or more to form a pressure sensitive hotmelt adhesive coating;
(ii) applying a foam, sensor or functional part to the coating of the pressure sensitive hotmelt adhesive.

The invention further relates to a use of the pressure sensitive hotmelt adhesive comprising at least one polymer and at least one polyester polyol based on betulin for bonding a foam, sensor or functional part to the inside of a tire.

The invention also relates to a tire comprising an innerliner having an innerliner surface facing an interior cavity of the tire, a pressure sensitive hotmelt adhesive layer with the pressure sensitive hotmelt adhesive comprising at least one polymer and at least one polyester polyol based on betulin and a foam, sensor or functional part. The foam, sensor or functional part is disposed on the pressure sensitive hotmelt adhesive layer. The pressure sensitive hotmelt adhesive layer may be disposed on the innerliner surface facing the interior cavity of the tire or, alternatively, a release agent may be disposed on the innerliner surface facing an interior cavity of the tire such that the pressure sensitive hotmelt adhesive layer is disposed on the release agent.

The tire may be a pneumatic tire further comprising a tread portion defining a tread width and a carcass with the innerliner being disposed radially inward of the carcass or is a radial inner part of the carcass.

The innerliner surface may comprise a release agent and/or the tire may comprise a release agent disposed on the innerliner surface facing an interior cavity of the tire.

The release agent may be selected from the group consisting of silicone release agents and polytetrafluoroethylene release agents.

The method or use according to the present invention may be free of a cleaning step before the step of applying the pressure sensitive hotmelt adhesive to the innerliner surface.

The method or use according to the present invention may be free of a cleaning step.

The method or use according to the present invention may be free of a curing step of the adhesive.

The pressure sensitive hotmelt adhesive may not have a setting time.

The pressure sensitive hotmelt adhesive of the method or tire according to the present invention may comprise at least one polymer and at least one polyester polyol based on botulin.

The pressure sensitive hotmelt adhesive may be applied to the innerliner surface at a temperature of 100 °C to 250 °C, preferably at 130 °C to 180 °C.

The pressure sensitive hotmelt adhesive may be applied to the innerliner surface in an amount of 10 g/m² to 3000 g/m², preferably in an amount of 50 g/m² to 1000 g/m² and most preferably in an amount of 100 g/m² to 250 g/m². The amount of the pressure sensitive hotmelt adhesive on the innerliner surface may range between 10 g/m² to 3000 g/m², preferably in an amount of 50 g/m² to 1000 g/m² and most preferably in an amount of 100 g/m² to 250 g/m². The area is defined as the area of the innerliner surface onto which the pressure sensitive hotmelt adhesive is applied to.

The foam may be a foam noise damper, preferably, the foam noise damper may have a density in a range of from 0.01 to 0.04 g/cm³. The foam may be made of or comprise polyurethane.

The pressure sensitive hotmelt adhesive may be applied as a spray, as beads, as a swirl and/or with a brush in the method or use according to the present invention.

### Detailed Description of the Invention

It will be understood that, although specific embodiments of the invention will be described hereinbelow for purposes of illustration, various modifications may be made without deviating from the spirit and scope of the invention. Therefore, the present invention is not limited except as by the appended claims. All embodiments disclosed and claimed herein can be implemented and executed in view of the disclosure without undue experimentation. The content of each of the documents referred to herein is to be understood to be incorporated herein by reference in its entirety.

The present invention serves to realize the above-outlined objects. Specifically, as demonstrated through the experimental data in the present application, the pressure sensitive hotmelt adhesive surprisingly has a high tolerance to the normally used release agents which are typically present on cured uncleaned tires. Thus, the release agents do not need to be removed, i.e., no cleaning step is required. In addition, short cycle times in the production of functionalized (bonded with a foam, sensor or functional part) tires can be achieved since, in addition to no cleaning being required, the classic curing / setting can be omitted. As a result, the process as a whole is significantly more efficient. Furthermore, there is the possibility of not having to produce the tires at a single production, since, due to the infinite open time of the pressure sensitive hotmelt adhesive, the adhesive may be applied to the tire at one location and the foam, sensor or functional part may be bonded to the inside a tire at a different location.

According to the present invention, the method for bonding a foam, sensor or functional part inside a tire comprising an innerliner having an innerliner surface facing an interior cavity of the tire, the method comprising or consisting of the steps of:
(i) applying a pressure sensitive hotmelt adhesive to the innerliner surface at a temperature of 100 °C or more to form a pressure sensitive hotmelt adhesive coating;
(ii) applying a foam, sensor or functional part to the coating of the pressure sensitive hotmelt adhesive.

According to the present invention, the pressure sensitive hotmelt adhesive comprising at least one polymer and at least one polyester polyol based on betulin is used for bonding a foam, sensor or functional part to the inside of a tire.

According to the present invention, the tire comprises an innerliner having an innerliner surface facing an interior cavity of the tire, a pressure sensitive hotmelt adhesive layer and a foam, sensor or functional part. The foam, sensor or functional part is disposed on the pressure sensitive hotmelt adhesive layer. The pressure sensitive hotmelt adhesive layer may be disposed on the innerliner surface facing the interior cavity of the tire or, alternatively, a release agent may be disposed on the innerliner surface facing an interior cavity of the tire such that the pressure sensitive hotmelt adhesive layer is disposed on the release agent.

The tire may be a pneumatic tire further comprising a tread portion defining a tread width and a carcass with the innerliner being disposed radially inward of the carcass or is a radial inner part of the carcass.

The innerliner surface may comprise a release agent and/or the tire may comprise a release agent disposed on the innerliner surface facing an interior cavity of the tire. The release agent may be any one release agent used in the art. Preferably, the release agent is selected from the group consisting of silicone release agents and polytetrafluoroethylene release agents.

The amount of the pressure sensitive hotmelt adhesive on the innerliner surface may range between 10 g/m² and 500 g/m², preferably between 50 g/m² and 250 g/m².

The sensor may be selected from tire pressure sensor, acceleration sensor, and/or temperature sensor.

The functional part may be selected from a foam, a scrim, and/or a film.

### Foam

The foam may be a foam noise damper.

The foam noise damper may extend circumferentially about the inside of the tire and axially from bead to bead. The foam noise damper may extend circumferentially about the inside of the tire and only partially across the width of the tire. The foam noise damper may extend axially no more than 50 percent of the tread width. The foam noise damper may extend axially in a range of from about 10 percent to 50 percent of the tread width. The foam noise damper may be substantially centered axially on the axial centerline of the tire. Multiple circumferential foam noise dampers may be used, disposed so as to equalize the load on the tire and maintain dynamic balance.

The foam noise damper may be disposed on radially inward of the tread. Accordingly, to deform easily during running and not to affect the running performance such as steering stability, the material of the damper is preferably a light-weight low-density flexible material, e.g., foamed rubber, foamed synthetic resins, cellular plastics and the like. In the case of foamed materials (or sponge materials), an open-cell type and a closed-cell type can be used, but an open-cell type is preferred. For example, synthetic resin foams such as ether based polyurethane foam, ester based polyurethane foam, polyethylene foam and the like; rubber foams such as chloroprene rubber foam, ethylene-propylene rubber foam, nitrile rubber foam, silicone rubber foam and the like can be used. Especially, polyethylene foam, polyurethane foams including ether based polyurethane foam and the like are preferably used in view of noise damping effect, lightness in weight, easy control of expansion rate and durability.

The foam noise damper may be an open-cell foam material consists of polyurethane (PU) foam which can either be of a polyester or polyethene type.

The foam noise damper may have a density in a range from 0.010 to 0.040 g/cm³.

The cross section profile of the foam noise damper may be rectangular. The cross section profile of the foam noise damper may represent 1 or 2 periods of a sine-type waveform on the side directed radially towards the tire air cavity and flat on the opposite side contacting the adhesive. The surface of the foam noise damper may include pyramids or cones directed radially towards the tire air cavity.

The width of the foam noise damper may be in a range of from 100 to 130 mm. In one embodiment, the width does not exceed a width calculated as: foam width = belt width - 70 mm.

The thickness, or gauge, of the foam noise damper may be in a range of from 15 - 30 mm, the gauge being a function of 1) tire cavity resonance damping, 2) maximum allowable weight of the damper when considering effects on tire performance, and 3) density of material.

The damper may include a splice while the surface to which it is attached will not be visible so that the splice appears closed. A possible configuration is to close the splice prior to the installation of the damper by forming a ring and gluing the endings together.

Depending on the environment where the tire is used, there is a possibility that the air which fills the tire cavity to inflate the tire is humid and the water makes condensation in the closed cavity. Accordingly, foam materials which are hard to be hydrolyzed such as ether-based polyurethane are suitably used.

Further, in order to prevent water from penetrating into the noise damper, a water repellent treatment can be preferably made on the foam material. Also, a mildew proof treatment can be preferably made.

Furthermore, in order to avoid poison in the emission gas generated when incinerating scrap tires, it is preferred that raw materials not including halogen are used to make the foam material.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 180 to 300 Hz is desirable.

In order to obtain an adequate noise dampening effect by the foamed noise damper in the tire, the foamed noise damper has a density or density and porosity in ranges suitable to dampen noise.

The foamed noise damper of the tire is of such a gauge as to not occupy any substantial inner portion of the inflated tire. Generally, its thickness ranges from 1 to 80 and preferably 10 to 50 percent of the total tire thickness, depending somewhat upon the tire size and intended use of the tire with its structured volume being less than 25 percent, preferably less than 10 percent, of the encompassed volume of air in the pneumatic tire. Thus, a typical thickness is in the range of 10 to 30 percent of the total tire thickness for an ordinary passenger pneumatic tire with its volume being less than 10 percent of the encompassed volume of air in the pneumatic tire.

### Pressure sensitive hotmelt adhesive

According to the present invention the term "pressure sensitive hotmelt adhesive" relates to hot melt adhesives, which are pressure sensitive adhesives. This term is common to the skilled person in the field of hot melt adhesives. Pressure sensitive adhesives are for example defined in István Benedek, "Pressure sensitive adhesives and applications", 2^{nd} Edition, 2004, Marcel Dekker, Inc. New York, Basel.

Pressure sensitive hot melt adhesives differ from "classic" hot melt adhesives due to their virtually infinite open time and permanent surface tack. These adhesives are melted and applied to form a bond, seal or permanently tacky film during cooling - without additional thermal, chemical or photochemical activation. The 100 % solids content eliminates the need for time-consuming drying or extraction of solvents. Thus, the method or use according to the present invention may be free of a curing step of the adhesive.

The pressure sensitive hotmelt adhesive may be a non-reactive pressure sensitive hotmelt adhesive.

Useful adhesives for the method, use and tire according to the invention are pressure sensitive hotmelt adhesives. Specifically, said pressure sensitive hotmelt adhesives comprise:
a) at least one polymer;
b) at least one polyester polyol based on betulin;
c) optionally at least one other plasticizer;
d) optionally at least one resin; and
e) optionally at least one additive, preferably at least one stabilizer.

The at least one polymer may be selected from the group consisting of acrylate, polyester, urethane, ethylene acrylate, butyl rubber and (synthetic) (natural) rubber (synthetic rubber); ethylene-vinyl acetate copolymers (EVA), polyolefin (co)polymers (PO), polyamide (co)polymers (PA), ethylene-propylene copolymers or styrene copolymers, individually or in a mixture, particularly preferably a styrene block copolymer such as a styrene and styrene-butadiene copolymer (SBS, SBR), a styrene-isoprene copolymer (SIS), a styrene-ethylene/butylene copolymer (SEBS), a styrene-ethylene/propylene-styrene copolymer (SEPS) or a styrene-isoprene-butylene copolymer (SIBS), most preferably a styrene-isoprene-styrene triblock copolymer. In general, synthetic rubbers are primarily used in various embodiments of the invention.

The at least one polymer is particularly preferably a styrene block copolymer such as styrene-isoprene-styrene (SIS), styrene-butadiene-styrene (SBS) or styrene-ethylene-butadiene-styrene (SEBS), more preferably a styrene-isoprene-styrene triblock copolymer.

The polymer may be present in the composition in an amount of 10 to 70% by weight, preferably 20 to 70% by weight, more preferably 25 to 50% by weight, most preferably 28 to 40% by weight, based on the total weight of the composition.

The polyester polyol may be obtained from a reaction mixture comprising the following monomer units:
i) betulin, preferably in an amount of from 5 to 50% by weight, more preferably from 5 to 40% by weight, more preferably from 10 to 35% by weight, in particular from 10 to 30% by weight or from 25 to 35% by weight;
ii) at least one triglyceride, preferably in an amount of from 20 to 85% by weight or from 20 to 85% by weight, more preferably from 20 to 80% by weight, still more preferably from 30 to 80% by weight, still more preferably from 40 to 80% by weight, in particular from 60 to 80% by weight or from 40 to 70% by weight; and
iii) optionally at least one dicarboxylic acid, preferably in an amount of from 2 to 45% by weight, more preferably from 5 to 45% by weight or from 2 to 40% by weight, in particular from 5 to 20% by weight or from 8 to 40% by weight;
wherein the weights are based in each case on the total weight of the monomer units.

The composition of the reaction mixture from which the polyester polyol is obtained can be adapted according to the properties of the polyester polyol to be achieved, such as its viscosity or its glass transition temperature. However, it has proven to be advantageous if the proportion of betulin in the reaction mixture is not too high in order to prevent possible processing problems of the raw materials.

The pressure sensitive hotmelt adhesive may contain the at least one polyester polyol based on betulin preferably in an amount of from 1 to 50% by weight, more preferably from 2 to 40% by weight, even more preferably from 5 to 30% by weight, in each case based on the total weight of the pressure sensitive hotmelt adhesive.

The betulin-based polyester polyol may be liquid at room temperature.

The triglyceride may have at least one free hydroxy group. The free hydroxy group may already be present in the compound or may be introduced by functionalization.

The triglyceride may be selected from the group consisting of soybean oil, linseed oil, sunflower oil, safflower oil, rapeseed oil, pugiernus oil, light-bush tree oil, grapeseed oil, canola oil, corn oil, cashew kernel oil, fish oil, castor oil, tall oil, coconut oil, palm oil, palm kernel oil, olive oil, poppy seed oil, hemp oil, avocado oil, algae oils and mixtures and derivatives thereof. Particularly preferred are castor oil, soybean oil and derivatives and mixtures of these compounds, in particular castor oil and derivatives thereof. Furthermore, synthetic or biotechnologically produced triglycerides can also be used.

The dicarboxylic acid may be a dicarboxylic acid selected from the group consisting of aliphatic dicarboxylic acids with 4 to 24 carbon atoms, aromatic dicarboxylic acids, dimer fatty acids and mixtures and derivatives thereof. The derivatives may be, for example, esters, acid chlorides or anhydrides of the carboxylic acids. Suitable aliphatic dicarboxylic acids preferably include succinic acid, adipic acid, azelaic acid, sebacic acid, dodecanedioic acid, tetradecanedioic acid and mixtures thereof. Suitable aromatic dicarboxylic acids are preferably selected from the group consisting of phthalic acid, isophthalic acid, terephthalic acid, furandicarboxylic acid, their anhydrides and methyl esters, and mixtures thereof. In a preferred embodiment, the dimer fatty acid or acids are dimers of fatty acids of the general formula CₙH₂ₙ₊₁COOH, where n is an integer from 4 to 33, preferably 7 to 17. In preferred embodiments, in addition to dimer fatty acids, derivatives thereof are also used, which are obtained, for example, by hydrogenation or distillation of the corresponding dimer fatty acid. Furthermore, the fatty acid is preferably selected from the group consisting of carylic acid, capric acid, lauric acid, myristic acid, palmitic acid, stearic acid, the derivatives of these fatty acids and mixtures thereof.

The dicarboxylic acid may be selected from the group consisting of aliphatic, cycloaliphatic and aromatic dicarboxylic acids having 2 to 20 carbon atoms, such as, for example succinic acid, adipic acid, azelaic acid, sebacic acid, dodecanoic acid, tetradecanedioic acid, furandiscarboxylic acid, isophthalic acid, terephthalic acid, orthophthalic acid, glutaric acid, oxalic acid, malonic acid, itaconic acid and mixtures thereof. The dicarboxylic acid may be succinic acid.

The use of one or more dicarboxylic acids can preferably be used to adjust the viscosity and other properties of the polyester polyol.

The pressure sensitive hot melt adhesive may comprise the polyester in an amount of from 5 to 40% by weight or from 5 to 30% by weight, based on the total weight of the composition.

The polyester polyol may have a glass transition temperature of -70°C to 0°C, which can be determined by Differential Scanning Calorimetry (DSC).

The pressure-sensitive hot melt adhesive may comprise at least one resin. Resins are typically used to change the viscosity of the adhesive composition, to lower it, and to influence the odor, the (initial) color and the color stability of the composition, as well as the tackiness and polarity of any polymers contained therein. According to the invention, both solid and liquid resins can be used.

The resin may have a softening point of 70 to 130 °C (ring-ball method, DIN 52011). Suitable resins include, but are not limited to, aromatic, aliphatic or cycloaliphatic hydrocarbon resins, as well as modified or hydrogenated versions thereof. Specific examples include: aliphatic or alicyclic petroleum hydrocarbon resins and hydrogenated derivatives thereof. Other resins that can be used in the context of the invention are, for example, hydroabietyl alcohol and its esters, in particular esters with aromatic carboxylic acids such as terephthalic acid and phthalic acid; modified natural resins such as resin acids from balsam resin, tall resin or root resin, e.g. fully saponified balsam resin; alkyl esters of optionally partially hydrogenated rosin with low softening points such as, for example, methyl, diethyl, diethyl, methyl, diethyl, diethyl, diethyl, diethyl, diethyl, diethyl, diethyl, diethyl, diethyl and diethyl alcohol.e.g. methyl, diethylene glycol, glycerol and pentaerythritol esters; terpene resins, in particular terpolymers or copolymers of terpene, such as styrene terpenes, α-methyl-styrene terpenes, phenol-modified terpene resins and hydrogenated derivatives thereof; acrylic acid copolymers, preferably styrene-acrylic acid copolymers and resins based on functional hydrocarbon resins.

Preferably, the at least one resin is a natural resin or a hydrocarbon resin, more preferably a tall oil ester, gum rosin (rosin), a tall resin, optionally partially polymerized, a terpene or a crude oil-based aliphatic, aromatic or cycloaliphatic hydrocarbon resin, as well as modified or hydrogenated versions thereof, for example C5-aliphatic or C9-aromatic hydrocarbon resin or a C5/C9 monomer mixture.

The resin may be present in the pressure-sensitive hot melt adhesive in an amount of from 15 to 70% by weight, preferably 20 to 60% by weight, based on the total weight of the composition.

The pressure-sensitive hot melt adhesive may be prepared according to the following method comprising the steps of:
a1) providing a reaction mixture comprising betulin, at least one triglyceride and optionally at least one dicarboxylic acid, from which the polyester polyol based on betulin is formed or has already partially or completely formed; or
a2) providing a polyester polyol based on betulin; and
b) mixing the reaction mixture from step a1) or the polyester polyol based on betulin from step a2) with further components of the pressure-sensitive adhesive composition, such as the polymer and optionally further components such as at least one further plasticizer, at least one resin and/or at least one additive, in a suitable sequence; preferably at a temperature of 100 to 200°C, more preferably at 120 to 180°C.

The other components of the pressure-sensitive hot melt adhesive composition, such as polymer, resin and additive, may be first prepared and mixed before the reaction mixture from step a1) or the polyester polyol from step a2) is added.

The pressure-sensitive hot melt adhesive composition may have a proportion of renewable raw materials of 50 to 100% by weight, preferably at least 60% by weight, more preferably at least 70% by weight, even more preferably at least 80% by weight, even more preferably at least 90% by weight, even more preferably at least 95% by weight, most preferably at least 99% by weight, in each case based on the total weight of the pressure-sensitive adhesive composition.

The pressure sensitive hot melt adhesive (pressure sensitive hot melt adhesive composition) may comprise or consists of:
a) at least one polymer, preferably an SIS polymer;
b) at least one polyester polyol based on betulin;
c) at least one resin, preferably a tall oil resin such as a pentaerythritol resin ester or an aliphatic hydrocarbon resin; and
d) at least one additive, preferably a stabilizer;
wherein the components are preferably used in amounts as described below:
a) 10 to 70 % by weight, preferably 20 to 70 % by weight, more preferably 25 to 40 % by weight; and/or
b) 1 to 50 wt.%, more preferably 2 to 40 wt.%, even more preferably 5 to 30 wt.%; and/or
c) 15 to 70 % by weight, preferably 20 to 60 % by weight; and/or
d) 0.01 to 20 % by weight, preferably 0.1 to 5 % by weight, more preferably 0.5 to 3 % by weight; based on the total weight of the pressure-sensitive hot melt adhesive composition.

The pressure sensitive hot melt adhesive composition may comprise or consists of:
a) at least one polymer, preferably an SIS polymer;
b) at least one polyester polyol based on betulin;
c) at least one resin, preferably a tall oil resin such as pentaerythritol resin ester or an aliphatic hydrocarbon resin;
d) at least one additive, preferably at least one stabilizer;
e) optionally at least one wax; and
f) optionally at least one other plasticizer;
wherein the components are preferably used in amounts as described below:
a) 10 to 70 % by weight, preferably 20 to 70 % by weight, more preferably 25 to 40 % by weight; and/or
b) 1 to 50 wt.%, more preferably 2 to 40 wt.%, even more preferably 5 to 30 wt. %;
c) 15 to 70 % by weight, preferably 20 to 60 % by weight; and/or
d) 0.01 to 20 wt.%, preferably 0.1 to 10 wt.%, more preferably 0.5 to 5 wt.%; and/or
e) maximum 10 wt.%, preferably maximum 8 wt.%, more preferably maximum 5 wt.%;
f) maximum 15 % by weight, preferably maximum 5 % by weight, more preferably maximum 1 % by weight, even more preferably maximum 0.1 % by weight, even more preferably maximum 0.01 % by weight, most preferably free of other plasticizers, based on the total weight of the pressure-sensitive hot melt adhesive composition.

The pressure sensitive hot melt adhesive composition may have a lower viscosity compared to other adhesive compositions, which allows it to be applied at lower temperatures. This leads to energy and cost savings for the customer. In a preferred embodiment, the pressure-sensitive hot melt adhesive has a Brookfield viscosity of:
(a) 500 to 50000 mPa s, preferably of 600 to 40000 mPa s, or most preferably of 700 to 25000 mPa·s (measurable at 20 RPM with spindle 29 at 180°C),
(b) 1000 to 75000 mPa s, preferably of 1200 to 30000 or most preferably of 1300 to 13000 mPa·s (measurable at 20 RPM with spindle 29 at 170°C),
(c) 1000 to 100000 mPa s, preferably of 2000 to 50000 mPa s, or most preferably of 3000 to 25000 mPa·s (measurable at 20 RPM with spindle 29 at 150°C),
(d) 1000 to 120000 mPa s, preferably of 2000 to 100000 mPa s, or most preferably of 3500 to 350000 mPa·s (measurable at 20 RPM with spindle 29 at 140°C),
(e) 2000 to 140000 mPa s, preferably of 3000 to 100000 mPa s, or most preferably of 4000 to 55000 mPa s (measurable at 20 RPM with spindle 29 at 130°C), and/or
(e) 8000 to 180000 mPa s, preferably of 9000 to 150000 mPa s, or most preferably of 10000 to 110000 mPa·s (measurable at 20 RPM with spindle 29 at 120°C).

In another preferred embodiment, the pressure-sensitive hot melt adhesive has a Brookfield viscosity of:
(a) 100 to 1000 Pa s, preferably of 150 to 400 Pa s, or most preferably of 160 to 200 Pa·s (measurable at 20 RPM with spindle 29 at 150°C),
(b) 100 to 1200 Pa s, preferably of 150 to 900 Pa s, or most preferably of 200 to 500 Pa·s (measurable at 20 RPM with spindle 29 at 140°C),
(c) 100 to 2000 Pa s, preferably of 200 to 1000 Pa s, or most preferably of 400 to 800 Pa s (measurable at 20 RPM with spindle 29 at 130°C), and/or
(d) 100 to 3000 Pa s, preferably of 400 to 2000 Pa s, or most preferably of 600 to 1000 Pa·s (measurable at 20 RPM with spindle 29 at 120°C).

The softening point of the pressure-sensitive hot melt adhesive composition may be higher, more preferably by at least 5°C, in particular by at least 10°C, than the softening point of reference adhesive compositions, which can result in increased heat resistance. The softening point of the pressure-sensitive hot melt adhesive may be in a range of 50 to 200°C, preferably in a range of 80 to 160 °C, more preferably in a range of 80 to 110 °C, more preferably in a range of 80 to 100 °C and most preferably in a range of 80 to 95 °C (ring-ball method, ASTM D36, glycerol). The softening point of the pressure-sensitive hot melt adhesive may also be in a range of 140 to 156 °C or in a range of 95 to 105 °C (ring-ball method, ASTM D36, glycerol).

The pressure-sensitive hot melt adhesive composition may have a glass transition temperature of from -50 to 80°C, more preferably from -10 to 30°C (measurement: DMA).

### Additives of the adhesive

The pressure-sensitive hot melt adhesive composition may further comprise at least one additive. Suitable additives, without being limited thereto, are, for example, components from the group consisting of antioxidants, in particular stabilizers, waxes, UV protectors, solvents, adhesion promoters, fillers, pigments, flame retardants, UV absorbers, optical brighteners and fragrances.

The pressure-sensitive hot melt adhesive may contain the at least one additive in an amount of from 0.01 to 20% by weight, preferably from 0.1 to 5% by weight, more preferably from 0.5 to 3% by weight, based on the total weight of the composition

Stability of adhesive compositions is typically achieved by adding finely divided solids, also known as fillers, which may be subdivided into those of the organic and inorganic kinds. Inorganic fillers include silica/silicon dioxide (coated or uncoated), chalk (coated or uncoated) and/or zeolites. The latter may additionally also act as desiccants. PVC powder may, for example, be considered as an organic filler. Fillers here generally substantially contribute to the sealing composition having a necessary internal cohesion after application. The stated additives or fillers may be divided into pigments and thixotroping fillers, which are also known as thixotroping agents.

Suitable thixotroping agents include known thixotroping agents such as bentones or kaolins, or also organic compounds such as hydrogenated castor oil or derivatives thereof with polyfunctional amines or the reaction products of stearic acid or ricinoleic acid with ethylenediamine. Co-use of silica, in particular, pyrogenic silica, has proved particularly favorable. Substantially swellable polymer powders may also be considered as thixotroping agents. Examples include polyacrylonitrile, polyurethane, polyvinyl chloride, polyacrylic acid esters, polyvinyl alcohols, polyvinyl acetates and their corresponding copolymers. Particularly good results may be achieved with finely divided polyvinyl chloride powders. Apart from the thixotroping agents, coupling agents such as mercaptoalkylsilane may also be used. It has been found convenient to use a monomercaptoalkyltrialkoxysilane. Mercaptopropyltrimethoxysilane is, for example, commercially conventional.

Properties of an adhesive composition may be further improved if other components are also added to the plastics powder used as thixotroping agent. These include substances categorized as plasticizers or swelling agents and swelling auxiliaries used in plastics.

Commercially available pressure-sensitive adhesive compositions usually contain plasticizers. These are used, for example, to reduce the viscosity of the pressure-sensitive adhesive composition and to improve wetting. Common plasticizers used in this context include medical white oils, naphthenic mineral oils, adipates, polypropylene, polybutylene, polyisoprene oligomers, hydrogenated polyisoprene and/or polybutadiene oligomers, benzoate esters, phthalates, vegetable or animal oils and their derivatives, sulfonic acid esters, monohydric or polyhydric alcohols, polyalkylene glycols, such as polypropylene glycol, polybutylene glycol or polymethylene glycol. Polybutylene oligomers should have a molecular weight of 200 to 6,000 g/mol, polyolefins should have a molecular weight Mw of up to about 2,000 g/mol, in particular up to 1,000 g/mol. In particular, poly(iso)butylenes and liquid or pasty hydrogenated hydrocarbons are used, especially polyisobutylene with a molecular weight Mw of less than 5000 g/mol.

Oil-like plasticizer components are often used. Exemplary plasticizer components are a liquid at room temperature, for example hydrocarbon oils, polybutylene/polyisoprene oligomers, (hydrogenated) naphthenic oils, kerosene oils or vegetable oils. Mineral oils are typically produced by distillation of crude oil and possibly other fossil raw materials. Mineral oils include, for example, paraffinic, naphthenic and aromatic hydrocarbons, alkenes and sulfur- and nitrogen-containing or organic compounds. The term "naphthenic oil" refers in particular to saturated ring-shaped hydrocarbons.

Suitable oils, in the present compositions employed as plasticizer, are preferably selected from the group consisting of naphthenic oils, paraffinic oils, vegetable and animal oils and derivatives thereof. Fully hydrogenated plasticizers can be selected from paraffinic hydrocarbon oils (including those available, for example, under the tradename PRIMOL from ExxonMobil Chemicals), polyisobutylenes, poly-1-butene oils and hydrogenated naphthenic oils. Preferably, the polyisobutylenes have a molecular weight ranging from about 600 to 5000 g/mol, more preferably from 800 to 4000 g/mol. Typically they are highly viscous liquids at room temperature. Suitable polyisobutylenes are available under the tradename "Parapol" from EXXON Chemicals or under the tradename "Oppanol" from BASF. Preferred plasticizers are paraffinic oils, more preferably with viscosities of 100 to 600 mPas, preferably 150 to 300 mPas at 25 °C as well as naphthenic oils, in particular naphthenic oils are preferred.

However, the pressure sensitive hotmelt adhesive composition is preferably free of further plasticizers. It is particularly preferred that the betulin-based polyester polyol partially or completely replaces the conventional plasticizer, in particular mineral oil-based plasticizer (e.g. naphthenic oil) in the pressure-sensitive hot melt adhesive composition. Due to the polymeric character of the betulin-based polyester polyol, there is preferably no or greatly reduced migration from the adhesive into materials, such as packaging materials or the packaged product, with the polyester polyols based on betulin compared to migratable naphthenic oils. This applies in particular to materials based on polyethylene, as no migration takes place due to the ester structure of the polyester polyol. Furthermore, by replacing naphthenic oils with polyester polyols based on betulin, the proportion of renewable raw materials in the formulation is increased.

The pressure sensitive hotmelt adhesive may comprise less than 5 wt.%, more preferably less than 3 wt.%, even more preferably less than 1 wt.%, even more preferably less than 0.5 wt.%, even more preferably less than 0.1 wt.%, even more preferably less than 0.01 wt.%, of other plasticizers than the polyester polyol based on betulin, preferably mineral oils, in particular naphthenic oils, and most preferably free of these, based on the total weight of the composition.

In a preferred embodiment, the further plasticizer (or the required amount of plasticizer), more preferably the mineral oil, even more preferably the naphthenic oil, in the pressure-sensitive adhesive composition is replaced by the betulin-based polyester polyol by at least 50%, more preferably by at least 60%, even more preferably by at least 70%, even more preferably by at least 80%, even more preferably by at least 90%, even more preferably by at least 95%, even more preferably by at least 98%, even more preferably by at least 99%, and most preferably by 100%.

Pigments and dyes used include substances known for these intended applications, such as titanium dioxide, iron oxides and carbon black.

Storage stability can be improved by adding stabilizers such as benzoyl chloride, acetyl chloride, toluenesulfonic acid methyl ester, carbodiimides and/or polycarbodiimides. Olefins with 8 to 20 carbon atoms have proven to be particularly good stabilizers. In addition to their stabilizing action, these may also act as plasticizers or swelling agents. Preferred olefins are those with 8 to 18 carbon atoms, in particular, with the double bond arranged in 1,2-position. Particularly good results are obtained if the molecular structure of these stabilizers is linear.

The adhesive preferably further comprises at least one tackifier.

In general, all tackifiers, commonly known in the field of hot melt adhesives are suitable. Exemplarily tackifiers include aliphatic, cycloaliphatic and aromatic hydrocarbons and modified hydrocarbons and hydrogenated versions; terpenes and modified terpenes and hydrogenated versions; and rosins and rosin derivatives and hydrogenated versions; and mixtures thereof.

The at least one tackifier may have a ring and ball softening point from 70°C to 150 °C, and/or a viscosity at 350° F (177° C), as measured using a Brookfield viscometer, of no more than 2000 mPas. The softening point can be determined using the method according to DIN EN 1238 (dated 2011/07). Useful examples include Eastotac^{™} H-100, H-115 and H-130 from Eastman Chemical Co., which are partially hydrogenated cycloaliphatic petroleum hydrocarbon resins with softening points of 100 °C, 115 °C and 130°C, respectively.

Other useful tackifier include Escorez^{™} 5300, 5400 and 5637, partially hydrogenated cycloaliphatic petroleum hydrocarbon resins, and Escorez^{™} 5600, a partially hydrogenated aromatic modified petroleum hydrocarbon resin all available from Exxon Chemical Co.; WINGTACK^{®} Extra, which is an aliphatic, aromatic petroleum hydrocarbon resin available from Sartomer; WINGTACK^{®} 95, an aliphatic C-5 petroleum hydrocarbon resin available from Sartomer; and Regalite R9001 and Regalite S5100, a hydrogenated hydrocarbon resins with different degree of hydrogenation, available from Eastman Chemical Company.

Suitable tackifier in particular include aliphatic hydrocarbon resins (C5 Resins), which are made from C5 piperylene and its derivatives. The most important ones are cis/trans 1,3-pentadienes, 2-methyl-2-butene, cyclopentene, cyclopentadiene, and dicyclopentadiene. These monomers are polymerized to oligomeric resins with low to high softening point using Lewis acid catalysts. C5 resins are aliphatic in nature. They are available in a wide range of molecular weights (MW) and softening points (solid grades 85 - 115°C and liquid grades 5 - 10°C) and provide outstanding tack. They also have a light yellow to light brown color and possess excellent heat stability.

Furthermore, aromatic hydrocarbon resins (C9 Resins), which made from C9 aromatic hydrocarbons are in particular suitable. Their composition depends on the hydrocarbon feedstock (coal tar, crude oil). The most important base monomers are indene, methyindenes, dicyclopentadiene, styrene, alpha-methylstyrene and various vinyl toluenes. These resins are available in a wide range of softening points. Compared to C5 resins, they have a much higher melt viscosity, are of darker color (dark yellow to brown) and have higher softening point ranging from about 100 to 150°C.

Hydrogenated C5/C9 resins and resin blends are also commercially available. These resins are often colorless and have improved heat and color stability. The at least one tackifier may be selected from C9 and/or C5 hydrocarbon resins or rosin ester, preferably C9 and/or C5 hydrocarbon resins.

Further useful tackifier include rosins and modified rosins with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. Commercially available grades include, but are not limited to, Sylvatac^{™} RE103, a pentaerythritol rosin ester available from Arizona Chemical Co., Permalyn^{™} 5110, an pentaerythritol modified rosin available from Eastman Chemical Company and Foral 105 which is a highly hydrogenated pentaerythritol rosin ester also available from Eastman Chemical Company. Other examples include Sylvatac^{™} RE85 and RE95, which are 85 °C and 95 °C melt point rosin esters, Sylvaros PR 295 and Sylvaros PR 140, which are polymerized and modified rosins, and Sylvares TP2040 is a phenolic modified terpene resin available from Arizona Chemical Co. and Foral AX-E is an 80 °C melt point hydrogenated rosin acid available from Eastman Chemical Company. Another exemplary tackifier, Piccotac 1115, has a viscosity at 350 °F (177 °C) of about 1600 mPas. Other typical tackifiers have viscosities at 350 °F (177 °C) of much less than 1600 mPas, for instance, from 50 to 300 mPas.

The adhesive may comprise at least one oil.

The adhesive may further comprise at least one antioxidant.

Antioxidants such as stabilizers are particularly preferably used in the pressure-sensitive hot melt adhesive composition, preferably in an amount of from 0.01 to 10% by weight, more preferably from 0.1 to 5% by weight, even more preferably from 0.5 to 2% by weight. They are used, for example, against thermal and oxidative degradation by oxygen and UV radiation. Furthermore, antioxidants can improve thermal stability and/or color stability.

When using stabilizers, care must be taken to ensure that they are compatible with the pressure-sensitive hot melt adhesive composition. For example, the antioxidants available under the trade name Irganox^{®} (BASF SE) can be used as stabilizers, preferably in quantities of 0.5 to 1.5 wt.%, for example 1 wt.%, based on the total weight of the composition.

The adhesive may comprise at least one wax.

Waxes may be added to the pressure-sensitive hot melt adhesive composition in amounts of 0.5 to 5% by weight. The amount is calculated in such a way that on the one hand the viscosity is reduced to the desired range, but on the other hand the adhesion is not negatively affected.

The wax can be of natural, possibly also chemically modified, or synthetic origin. Natural waxes can be vegetable waxes, animal waxes, mineral waxes or petrochemical waxes. Chemically modified waxes can be hard waxes such as montan ester waxes, sasol waxes etc. Polyalkylene waxes and polyethylene glycol waxes are used as synthetic waxes. Preferably, petrochemical waxes such as petrolatum, kerosene waxes, microcrystalline waxes and synthetic waxes are used. Particularly preferred are paraffinic and/or microcrystalline waxes and/or hydrogenated versions thereof, in particular polypropylene or polyethylene wax with a dropping point determined according to ASTM D-3954 of 50°C to 170°C.

The consistency of the pressure-sensitive hot melt adhesive composition can be adjusted according to the respective requirements, for example by adding suitable solvents. In various embodiments, the pressure-sensitive hot melt adhesive composition further comprises one or more solvents. However, taking into account the considerable ecological and economic requirements associated with the use of organic solvents in particular, it is advantageous to dispense with the use of solvents. Therefore, the pressure-sensitive hot melt adhesive composition may be free of solvents. The use of solvents can be completely or partially dispensed with if the properties of the polyester polyol used are selected accordingly. In this context, the pressure-sensitive hot melt adhesive composition is therefore preferred in which the betulin-based polyester polyol used has an OH number of 5 to 200 mg KOH/g, preferably 20 to 140 mg KOH/g.

The pressure-sensitive hot melt adhesive composition may be solvent-containing, solvent-free or a dispersion.

### Method steps

In accordance with the present invention, cleaning of the tire innerliner surface before application of the pressure sensitive hotmelt adhesive is optional. As such, the method or use according to the present invention may be free of a cleaning step before the step of applying the pressure sensitive hotmelt adhesive to the innerliner surface. The method or use according to the present invention may be free a cleaning step.

The surface may be cleaned using a hot water high pressure (HWHP) water jet at about 65 °C and up to 90 bar. Mechanical cleaning (grinding, buffing) is not needed.

The pressure sensitive hotmelt adhesive may be applied to the innerliner surface either covering the complete attachment surface at a uniform thickness. The pressure sensitive hotmelt adhesive may be applied in circumferential stripes, for example using 3 stripes in a shoulder-centerline-shoulder configuration.

The pressure sensitive hotmelt adhesive may be applied as a wavy line with a period length of up to 10 cm varying from shoulder to shoulder.

The pressure sensitive hotmelt adhesive may be applied as beads and optionally spread-out using rollers or spatulas to ensure the adhesive mixes with the contaminations on the innerliner surface and acts as a solvent to them. The pressure sensitive hotmelt adhesive may be applied with a brush to ensure the adhesive mixes with the contaminations on the innerliner surface and acts as a solvent to them.

The pressure sensitive hotmelt adhesive may be applied as a spray.

The pressure sensitive hotmelt adhesive may be applied as a swirl.

The pressure sensitive hotmelt adhesive may be applied to the innerliner surface at a temperature of 100 °C to 250 °C, preferably at 130 °C to 180 °C.

The pressure sensitive hotmelt adhesive may be applied to the innerliner surface in an amount of 10 g/m² to 3000 g/m², preferably in an amount of 50 g/m² to 1000 g/m² and most preferably in an amount of 100 g/m² to 250 g/m².

The foam, sensor or functional part can be disposed in various inner portions of the tire following the step of applying the pressure sensitive hotmelt adhesive by applying a foam, sensor or functional part to the coating. For example, they can extend from bead to bead for coverage of the innerliner spanning both the tread and sidewall portions of the tire or it can simply be selectively and locally disposed on the innerliner surface of the tire. The foam, sensor or functional part may disposed on the innerliner surface circumferentially and bisected by the equatorial plane of the tire.

The innerliner surface may or may not feature a smooth portion. The smooth portion, if present, results from the fact that tire curing bladders are typically ground at their center to remove imperfections and flash resulting from the bladder production process. For tires to be equipped with a foam noise damper, tire curing bladders having a smooth portion wider than about 50% of the damper width (i.e., less or equal to about 60 mm) may be used.

### Definitions

The term "polyester" as used herein encompasses not only classical polyesters with repeating units derived from acids and alcohols, but also the macromers, which are formed by transesterification of triglycerides with botulin, i.e., the polyesters also include transesterification products of betulin with triglycerides, in particular the macromers thus formed.

The hydroxyl number (OH number) is a measure of the number of free hydroxyl groups in a respectively defined reference quantity. The OH number can be determined experimentally by means of potentiometric titration or by means of acid-base titration.

Betulin is also known as 3a-hydroxymethyl-1-isopropenyl-5a,5b,8,8,11a-pentamethyl-icosahydro-cyclopenta[a]chrysene-9-ol.

The terms "non-reactive" or "physically setting" as used herein, mean that the solidification takes place in a physical process (e.g. by solidification during cooling, or by evaporation of solvents or water).

Within the context of the present invention, the term "solid" refers to compounds/compositions that are solid at standard conditions, i.e., said compounds/compositions are neither in liquid nor in gaseous form. Preferably, the solids are in the form of a powder, granules or compacts.

Unless specified otherwise herein, atmospheric pressure is to be understood to be 101.325 kPa.

Unless specified otherwise herein, room or ambient temperature is to be understood to be 21±1 °C.

Unless otherwise stated, all measurements and processes disclosed herein are to be understood to have been conducted under standard conditions. Within the context of the present application, "standard conditions" are equivalent to "normal temperature and pressure" which are defined as a temperature of 21±1 °C and an absolute pressure of 101.325 kPa (1 atm).

All percentages given herein in relation to the compositions or formulations relate to weight percentage values (wt.%) relative to the total weight of the respective composition, if not explicitly stated otherwise. Preferably, these percentages refer to weight percentages (wt.%) based on the total weight of the respective dried composition.

Unless stated otherwise, numeric values specified without decimal places refer to the full value specified with one decimal place. Such to exemplify the foregoing, 99 % means 99.0 %.

Within the context of the present application, the expression "essentially free" refers to the circumstance in which the species in respect of which the composition or material at hand is essentially free may nonetheless be present in minor quantities (for example, as impurities in other components present in the composition at hand - commercially available solvents may contain minor quantities of, for example, acetone or methylethylketone as unwanted impurities) which do not affect the desired properties taught herein to be associated with the compositions of the present technology. Essentially free in this context may thus mean that the species of which the composition or material in question is essentially free may be present in an amount of 1000 ppm or less, 750 ppm or less, 500 ppm or less, 300 ppm or less, 200 ppm or less, 100 ppm or less, 50 ppm or less, or 10 ppm or less.

The mention of any document herein is not an admission that such document or any of its contents belong to the general knowledge of the skilled person in any jurisdiction.

As used herein, the transitional term "comprising" which is synonymous with "including" or "containing" is inclusive or open-ended and does not exclude additional, unrecited elements or method steps. However, in each recitation of "comprising" herein, it is intended that the term also encompass and may thus be replaced, as alternative embodiments, by the term "consisting essentially of" or "consisting of", where "consisting of" excludes any element or step not explicitly specified and "consisting essentially of" permits the inclusion of additional unrecited elements or steps that do not materially affect the essential or basic characteristics of the composition or method under consideration.

Where a numerical range is disclosed herein, such range is continuous, inclusive of both the minimum and maximum values of the range as well as every value between such minimum and maximum values. Still further, where a range refers to integers, every integer between the minimum and maximum values of such range is included. In addition, where multiple ranges are provided to describe a feature or characteristic, such ranges can be combined. That is to say that, unless otherwise indicated, all ranges disclosed herein are to be understood to encompass any and all sub-ranges subsumed therein. For example, a stated range of from "1 to 10" should be considered to include any and all sub-ranges between the minimum value of 1 and the maximum value of 10 inclusive of the values 1 and 10. Exemplary sub-ranges of the range 1 to 10 include, but are not limited to, 1 to 6.1, 3.5 to 7.8, and 5.5 to 10. It is to be understood that the upper and lower amount, range, and ratio limits set forth herein may be independently combined.

Each element or feature of the invention taught to be present in a given range or amount can be combined within a respective embodiment with the other elements of said embodiment, said other elements likewise being present in the ranges or amounts taught herein for said other elements. All ranges and amounts for one element of an embodiment can be combined with all ranges and amounts of the other elements in said embodiment. As such, ranges or values which are taught for one element or component of the invention, for example, to be preferred, more preferred or most preferred can be combined with any range or amount taught in respect of another element or component of said embodiment, irrespective of whether the range or amount taught in respect of the other element is referred to as being preferred, more preferred or most preferred etc (or simply disclosed without any such label or reference).

As used herein, the singular forms "a", "an" and "the" include plural referents, unless the context clearly dictates otherwise.

"At least one" refers to one or more, i.e. 1, 2, 3, 4, 5, 6, 7, 8, 9, 10 or more of the referenced species. In connection with a given species, the term does not relate to the total amount of molecules, but to the type of compound. Such to exemplify the foregoing, "at least one alcohol" means that one or more alcohols may be included, without specifying the amount of each alcohol. The above applies *mutatis mutandis* to expressions referring to a higher number (e.g., "at least two," "at least three," etc.), each beginning with a respective higher number (e.g., 2, 3, 4, 5, 6, 7, 8, 9, 10 or more for "at least two"; 3, 4, 5, 6, 7, 8, 9, 10 or more for "at least three"; etc.).

The terms "about" or "approximately", as used herein in connection with a numerical value, refer to a variance of ±10 %, preferably ±5 %, more preferably ±1 %, with respect to the given numerical value.

Unless stated otherwise, references to molar masses refer to the number-average molar mass (Mn).

### Examples

The examples set forth hereinbelow serve merely to exemplify specific embodiments of the invention and in no way limit the scope of the invention as claimed and described elsewhere herein.

Unless stated otherwise, all synthetic processes and parameter measurements are to be understood to have been conducted at room/ambient temperature, i.e. at 21±1 °C, and atmospheric pressure.

Unless otherwise stated, all reagents are laboratory grade.

All reagents used in the Mixtures and Examples described hereinbelow were purchased commercially under the stipulated product names.

### Methods for measuring

### Molas mass

The samples were characterized with Tetrahydrofuran (p.a. unstabilized (THF) by Fisher Scientific) as the eluent. GPC was performed using Acquity APC Isocratic Solvent Manager (GSOP 00705), Acquity APC Sample Manager (GSOP 00704), Acquity APC Single Zone Column Manager (GSOP 00703), Acquity APC Rl-Detector (GSOP 00237), and Chromatographic data system Empower 3 at 40 °C and a flow rate of 0.5 ml/min using a set of columns (Waters APC XT Columns 450 Ä, 125 Ä and 45 Ä each of them 4.6 x 150 mm, 1.7 µm and 2.5 µm respectively (Waters)). The sample (115 ± 20 mg of the sample (triplicate analysis) are weighed to scientific precision into 25 mL volumetric flasks) was filtered through a 0.20 µm syringe filter into an analysis vial and 20 µl thereof were injected. The molecular weight averages (Mw) and the number-average molecular weights (Mn) that were determined for the tested samples are based on an external calibration (fifth-order polynomial) that was carried out with the help of the polystyrene standards.

### Viscosity

Viscosity measurements were performed on a Brookfield Brookfield RVTDV II (spindle 29) at 150, 170 or 180 °C at a shear rate of 10°/sec according to ASTM D 3236.

### Softening point

The softening point of the pressure-sensitive hot melt adhesive with the ring-ball method according to ASTM D36 with glycerol.

### Differential scanning calorimetry (DSC)

The polyester polyols were measured by differential scanning calorimetry, whereby a sample of the reaction mixture was first heated to 150°C and then brought to -90°C at a cooling rate of 10 Kelvin per minute. After 10 minutes at -90°C, the sample of the reaction mixture was brought to 150°C at a heating rate of 10 Kelvin per minute and the DSC diagram was recorded. The DSC diagram was used to determine the glass transition temperatures of the liquid polyester polyols.

### Adhesion

Adhesion is considered as sufficient when adhesion to the innerliner is high enough to prevent foam from detaching during tire life time; although there is no upper limit, it is not required that the adhesion exceeds the tear resistance of the foam to adhesive interface or the foam itself. Additionally the adhesive should remain elastic during tire life time and be resistant to fatigue under flexing and shearing.

### Bead Peel Test

The bead peel test was performed by following the steps of:
1. Apply adhesive/sealant bead on tire surface,
2. Letting the adhesive bead cure/solidify at a temperature of 23°C at a relative humidity of 50% (RH) for 14 days,
3. Peeling of adhesive bead and, if required (when the substrate or the adhesive tears cohesively), simultaneous cutting into the upper layer of the substrate (the interface between adhesive and substrate is cut so that the adhesive can tear again cohesively), and
4. Rating of peel force and, if applicable, fracture pattern as high, medium or poor adhesion.

### Experimental data:

The production of polyester polyols as a polymeric mineral oil-free raw material for pressure-sensitive hot melt adhesives was carried out according to the following scheme:
Castor oil or another vegetable oil was introduced into a 1 liter four-neck flask equipped with a nitrogen inlet, thermostat, paddle stirrer and distillation arm and the corresponding amount of antioxidant (1 wt.% quinox 1010) and betulin were stirred in successively at room temperature. The reaction mixture was heated stepwise and stirred at a temperature of 220°C in a nitrogen stream for about 1 hour. The reaction mixture was then cooled and optionally 0.02% by weight of catalyst (85% phosphoric acid) was added to the reaction mixture. The reaction mixture was then heated to 220°C and stirred under nitrogen for a further 30 minutes. The temperature was then reduced to 200°C and the corresponding amount of dicarboxylic acid (e.g. succinic acid) was optionally added in the nitrogen countercurrent. The temperature was then increased again to 220°C and stirred for a further 6 hours. The pressure in the reaction flask was then gradually reduced to 30 mbar. The acid number was continuously monitored. As soon as the acid number dropped below a value of 3 mg KOH/g in relation to the reaction mixture, the reaction mixture was first cooled so that a sample could be taken for analytical measurements based on the corresponding viscosity of the reaction mixture. The acid number and hydroxyl number were then finally determined at 20°C and the mixture was characterized chromatographically. If no dicarboxylic acid is added, the reaction control can be carried out via the viscosity and an optical assessment (e.g. homogenization of the mixture to a phase).

### Production of a pressure-sensitive adhesive

The production of a pressure-sensitive adhesive with polyester polyols: The raw materials listed were formulated according to the mixing sequence shown in the following table at the specified temperature. The adhesive was mixed with a propeller stirrer at speeds of 50-250 rpm.

**Table 1: Formulation**

| **Raw material type** | **Wt. %** | **Weight in g** | **Mixing temperature** |
|---|---|---|---|
| SIS polymer | 30 | 30 | 160 °C |
| Resin | 26.5 | 53 | |
| Resin | 27.5 | 55 | |
| Polyester as synthesized above | 15.0 | 30 | |
| Stabilizer | 1.0 | 2 | |

The viscosity of the pressure-sensitive hot-melt adhesives was measured in accordance with the method outlined above. The results are summarized in Table 2.

**Table 2: Viscosity data**

| Product | **TECHNOMELT PS 4550** | **TECHNOMELT PS 8774** | **TECHNOMELT PS 8746** |
|---|---|---|---|
| Temperature [°C] | Viscosity [Pa·s] | Viscosity [Pa·s] | Viscosity [Pa·s] |
| 120 | 797.2 | 11.6 | 104.0 |
| 130 | 541.7 | 6.7 | 49.9 |
| 140 | 324.3 | 4.5 | 30.4 |
| 150 | 188.9 | 3.2 | 19.5 |

Due to its high viscosity, the silicone is usually extruded at an extrusion rate of 40mg/sec to 90mg/sec.

The relative molecular weight averages of the of the pressure-sensitive hot-melt adhesives soluble in tetrahydrofuran (Toluene) was measured in accordance with the method outlined above. The results for each of the three measurements are summarized in Table 3.

**Table 3: Relative molecular weight averages in g/mol**

| Product | **TECHNOMELT PS 4550** | | **TECHNOMELT PS 8774** | | **TECHNOMELT PS 8746** | |
|---|---|---|---|---|---|---|
| # | Mn | Mw | Mn | Mw | Mw | Mn |
| 1 | 54340 | 1541 | 37037 | 909 | 52501 | 1190 |
| 2 | 55027 | 1552 | 38042 | 922 | 52454 | 1196 |
| 3 | 53585 | 1537 | 39323 | 940 | 51580 | 1168 |

The adhesive according to the present invention has not only a lower as well as more uniform overall viscosity at the relevant temperature range but also a lower viscosity at 140°C. As a result, it can be applied at lower temperatures. This leads to energy and cost savings for the customer.

The pressure-sensitive hot-melt adhesive as outlined above was employed in tire bonding experiments. Specifically, the pressure sensitive hotmelt adhesive was applied to the tire innerliner surface without cleaning said surface, i.e., the innerliner surface remained contaminated with various mold release agents (mold release agents mostly silicone oil based) when the adhesive was applied. The adhesive was applied as a bead on the tire inside at the needed application temperature, usually above 140°C, but preferably not higher as 220°C. Preferably, the application temperature is between 160°C and 180°C. For TECHNOMELT PS 4550 the application temperature is preferably 200°C.

The adhesives were tested on different tire types. Said Tire Types are summarized in Table 4.

**Table 4: Tire Types**

| | **Name** | **Bladder** | **Curing Aid** | **Speed-symbol** | **Tire Size** |
|---|---|---|---|---|---|
| Tire Type A | ULTRAGRIP PERFORMANCE + | H3 | 100 % Lining | V | 275/35R21 |
| Tire Type B | ULTRA GRIP ICE 2 | Bladder 476 | 100 % Lining | T | 235/45R18 |
| Tire Type C | ULTRAGRIP PERFORMANCE + | AP499 | lining cement (MISIPIC) 100% | V | 245/45R19 |
| Tire Type D | ULTRAGRIP PERFORMANCE + | Bladder 497 | 100 % Lining | V | 255/40R20 |
| Tire Type E | ULTRA GRIP ICE 2 | Bladder 499 | 100 % Lining | T | 245/45R19 |
| Tire Type F | ULTRAGRIP PERFORMANCE + | | none* | V | 255/35R21 |

The curing Aid being "none" means that a permanent release coating is present on the bladder. The Curing Aid being "100% lining cement" means that a release agent is sprayed on.

Curing took place at standard climate (23°C, 50% relative humidity (r.h.)) for at least 14 days.

Subsequent to the curing, the fracture pattern was assessed analogous to DIN 10365 in combination of the adhesion on the inner tire surface and by means of manual tensile force (qualitative validation by 4 persons at least adhesive specialist) on the applied bead. Specifically, the Bead Peel Test was performed. The results are depicted in Table 5.

**Table 5:**

| **Chemical Base of the adhesive** | Silicone* | PSA HM | PSA HM | PSA HM | APAO | APAO |
|---|---|---|---|---|---|---|
| **Description** | **Loctite SI 5930 FIT** | **TECHNOMELT PS 4550** | **TECHNOMELT PS 8774** | **TECHNOMELT PS 8746** | **TECHNOMELT AS 8383** | **TECHNOMELT AS 8382** |
| Tire Type A | CF / High adhesion | Poor adhesion | Medium adhesion | Medium adhesion | Poor adhesion | Poor adhesion |
| Tire Type B | CF/ High Adhesion | Poor adhesion | Poor adhesion | Poor adhesion | Poor adhesion | Poor adhesion |
| Tire Type C | CF/ High Adhesion | Poor adhesion | Medium adhesion | Poor adhesion | Poor adhesion | Poor adhesion |
| Tire Type D | AF / Poor Adhesion | Medium adhesion | High adhesion | Medium adhesion | Poor adhesion | Poor adhesion |
| Tire Type E | AF / Poor Adhesion | Medium adhesion | High adhesion | Medium adhesion | Poor adhesion | Poor adhesion |
| Tire Type F | CF / High Adhesion | Medium adhesion | High adhesion | High adhesion | Medium adhesion | Poor adhesion |

| | | | | | | |
|---|---|---|---|---|---|---|
| *Comparative Example PSA HM = pressure sensitive hot melt adhesive, APAO = amorphous poly alpha olefin hot melt adhesives, AF = Adhesion Failure, CF = Cohesion Failure | | | | | | |

From Table 5, it is immediately apparent that the pressure sensitive hot melt adhesive PS 8774 shows the best performance, PS 8746 is second best and PS 4550 performs poorest amongst the PSA HM. However, all of the pressure sensitive hotmelt adhesives outperform the comparative example based on silicone as well as the amorphous poly alpha olefin hot melt adhesives. The comparative example (silicone), even though it demonstrates different degrees of adhesion, had either adhesive or cohesive failures for each tested tire type.

The above data show that the pressure sensitive hotmelt adhesive surprisingly has a high tolerance to the normally used release agents which are typically present on cured uncleaned tires. Since the pressure sensitive hotmelt adhesive is tolerant to the release agents, no cleaning step is required.

It has further been found that for the above-outlined effect, it is necessary for the pressure sensitive adhesive to be applied to the tire at temperatures of at least 100 °C.

Using the pressure sensitive adhesive short cycle times in the production of functionalized (bonded with a foam, sensor or functional part) tires can be achieved since no cleaning is required and even the classic curing / setting (even of specially developed silicones for tire production) can be omitted. As a result, the process as a whole is significantly more efficient. Furthermore, there is the possibility of not having to produce the tires at a single production, since, due to the infinite open time of the pressure sensitive hotmelt adhesive, the adhesive may be applied to the tire at one location and the foam, sensor or functional part may be bonded to the inside a tire at a different location.

## Claims

1. Use of the pressure sensitive hotmelt adhesive comprising at least one polymer and at least one polyester polyol based on betulin for bonding a foam, sensor or functional part to the inside of a tire.

2. A method for bonding a foam, sensor or functional part inside a tire comprising an innerliner having an innerliner surface facing an interior cavity of the tire, the method comprising or consisting of the steps of:
(i) applying a pressure sensitive hotmelt adhesive comprising at least one polymer and at least one polyester polyol based on betulin to the innerliner surface to form a pressure sensitive hotmelt adhesive coating;
(ii) applying a foam, sensor or functional part to the coating of the pressure sensitive hotmelt adhesive.

3. The method of claim 2, wherein the tire is a pneumatic tire further comprising
a tread portion defining a tread width and a carcass, wherein the innerliner is disposed radially inward of the carcass or is a radial inner part of the carcass.

4. The method of claims 2 or 3, wherein the innerliner surface comprises a release agent and/or wherein the tire comprises a release agent disposed on the innerliner surface facing an interior cavity of the tire.

5. The method of claim 4, wherein the release agent selected from the group consisting of silicone release agents and polytetrafluoroethylene release agents.

6. The method of any one of claims 2 to 5, wherein the method does not comprise a cleaning step before the step of applying the pressure sensitive hotmelt adhesive to the innerliner surface to form pressure sensitive hotmelt adhesive coating.

7. The method of any one of claims 2 to 6, wherein the method does not comprise a cleaning step.

8. The method of any one of claims 2 to 7, wherein the method does not comprise curing of the adhesive.

9. The method of any one of claims 2 to 8, wherein the pressure sensitive hotmelt adhesive does not have a setting time.

10. The method of any one of claims 2 to 9, wherein the pressure sensitive hotmelt adhesive is applied to the innerliner surface at a temperature of 100 °C to 250 °C, preferably at 130 °C to 180 °C.

11. The method of any one of claims 2 to 10, wherein the pressure sensitive hotmelt adhesive is applied to the innerliner surface in an amount of 10 g/m² to 3000 g/m², preferably in an amount of 50 g/m² to 1000 g/m² and most preferably in an amount of 100 g/m² to 250 g/m2.

12. The method of at least one of claims 2 to 11, wherein the foam is a foam noise damper, preferably, wherein the foam noise damper has a density in a range of from 0.01 to 0.04 g/cm³.

13. The method of at least one of claims 2 to 12, wherein the pressure sensitive hotmelt adhesive is applied in form of a spray, as beads, as a swirl and/or with a brush.

14. The method of at least one of claims 2 to 13, wherein the pressure sensitive hotmelt adhesive is applied to the innerliner surface at a temperature of 100 °C or more.

15. A tire comprising
an innerliner having an innerliner surface facing an interior cavity of the tire,
a pressure sensitive hotmelt adhesive layer, wherein the pressure sensitive adhesive comprises at least one polymer and at least one polyester polyol based on betulin and
a foam, sensor or functional part
wherein the foam, sensor or functional part is disposed on the pressure sensitive hotmelt adhesive layer,
wherein
(a) the pressure sensitive hotmelt adhesive layer is disposed on the innerliner surface facing the interior cavity of the tire, or
(b) a release agent is disposed on the innerliner surface facing an interior cavity of the tire and the pressure sensitive hotmelt adhesive layer being disposed on the release agent.
